# EUROPEAN PATENT APPLICATION

(11) **EP 1 965 097 A2**
(43) Date of publication of application: **03.09.2008**
(21) Application number: 08003913.4
(22) Date of filing: 03.03.2008
(51) Int. Cl.: F16H 3/093

(54) **Manual transmission and vehicle having transverse-mount engine and transmission arranged in tandem**

(30) Priority: 02.03.2007 JP 2007053023
(71) Applicant: AISIN AI Co., Ltd., Nishio-shi, Aichi-ken (JP)
(72) Inventor: Suzuki, Hiroyuki, Nishio-shi Aichi-ken (JP)
(74) Representative: Serjeants

(57) **Abstract**

A vehicle includes an transverse- mount engine (10) and a transmission having an input shaft (15), an output shaft (19), a first counter shaft (16), a second counter shaft (17), a first gear change mechanism (20A), a second gear change mechanism (20B), and a transmission case (12), wherein a number of the gear pairs of the second gear change mechanism (20B) is less than a number of the gear pairs (21a, 21b, 22a, 22b, 23a, 23b, 24a, 24b) of the first gear change mechanism (20A), and the gear pairs (25a, 25b, 26a, 26b) of the second gear change mechanism (20B) are located close to the engine (10) in an axial direction, thereby forming a cut-out portion (12c) in the transmission case (12), a side frame (13) is arranged to pass through the cut-out portion (12c) of the transmission case (12).

## Description

### FIELD OF THE INVENTION

This invention relates to a manual transmission and a vehicle having a transverse-mount engine and a transmission arranged in tandem.

### BACKGROUND

In a front-engine, front wheel drive vehicle transversely mounting an engine and a transmission which are arranged in tandem, various attempts have been made to reduce the size of the transmission and enhance torque. For example, as disclosed in JP 2002-70960A, one input shaft and two counter shafts are provided and driven gears are arranged in parallel to each other between the input shaft and each counter shaft, thereby reducing length of the entire transmission and increasing the number of speed stages. According to a second embodiment of JP 2002-70960A, in order to increase the number of speed stages for torque enhancement, two counter shafts having substantially identical length are adopted and gears and switching clutches are arranged over the entire length of each counter shaft. Thus, an entire rear surface of a transmission case is a flat surface, to which each counter shaft is arranged perpendicularly.

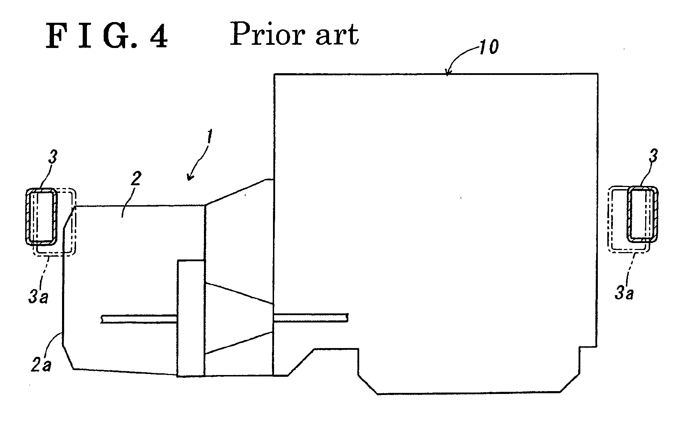

Fig. 4 shows a known example in which an engine 10 and a transmission 1 which are arranged in tandem are transversely mounted in a front portion of a vehicle body. In this example, an entire rear surface 2a of a transmission case 2 is flat, and the engine 10 and the transmission 1, arranged in tandem, are located between a pair of side frames 3 longitudinally extending at both sides of the vehicle body. Further, a front portion of each side frame 3 is bent upwardly to avoid interference with a front axle, and the left side frame 3 in Fig. 4 is arranged at an immediate left side of an upper portion of the rear surface 2a of the transmission case 2.

A demand exists for a side frame that has a larger cross section and a rectilinear shape for improving collision safety and enhancing stiffness of the vehicle. However, in order to meet the above-described demand, the shape of the cross section of the side frame has to be changed to a shape indicated by a double chain dash 3a. In those circumstances, the side frame 3 interferes with a left side of the upper portion in the rear surface 2a of the transmission case 2 and is unable to be arranged within a predetermined space in the vehicle body. The foregoing example describes the front-engine, front wheel drive vehicle in which the engine and the transmission, arranged in tandem, are transversely mounted. However, even if a similar type of engine and transmission are transversely mounted in a rear-engine, rear-wheel drive vehicle, a similar drawback still occurs.

A first embodiment of JP 2002-70960A discloses that a portion of the rear surface of the transmission case positionally corresponding to the second counter shaft is formed relatively close to the engine by eliminating one speed stage, compared to a portion of the rear surface of the transmission case positionally corresponding to the first counter shaft. However, the portion of the rear surface of the transmission case, positionally corresponding to the second counter shaft and located relatively close to the engine, is positioned at a lower side of the transmission case. Thus, the above-described configuration merely generates an unnecessary dead space and does not solve the drawbacks of the side frame stated above.

### SUMMARY OF THE INVENTION

According to an aspect of the present invention, a vehicle includes a transverse-mount engine and a transmission arranged in tandem with the engine and including an input shaft driven by the engine for rotation, an output shaft connected to driving wheels, a first counter shaft arranged in parallel to the input shaft and connected to the output shaft, a second counter shaft arranged in parallel to the input shaft and connected to the output shaft, the second counter shaft located at a higher position than the first counter shaft, a first gear change mechanism provided between the input shaft and the first counter shaft and composed of a plurality of gear pairs and a plurality of switching clutches, a second gear change mechanism provided between the input shaft and the second counter shaft and composed of a plurality of gear pairs and a switching clutch, a transmission case covering the input shaft, the first counter shaft, the second counter shaft, the reverse shaft, the output shaft, the first gear change mechanism, the second gear change mechanism, a reverse gear change mechanism, wherein a number of the gear pairs of the second gear change mechanism provided between the input shaft and the second counter shaft is less than a number of the gear pairs of the first gear change mechanism provided between the input shaft and the first counter shaft, the plurality of gear pairs of the second gear change mechanism are located close to the engine in an axial direction, the transmission case includes a first portion and a second portion at a rear surface thereof located at an opposite side from the engine, the second portion is formed at an upper portion of the rear surface which positionally corresponds to a portion provided at the second counter shaft of the second gear change mechanism, the first portion positionally corresponds to the first gear change mechanism, the second portion is located relatively close to the engine by locating the plurality of gear pairs of the second gear change mechanism close to the engine, compared to the first portion, thereby forming a cut-out portion in the transmission case, wherein a pair of side frames are provided extending in a longitudinal direction at both sides of the vehicle, and one of the side frames is arranged to pass through the cut-out portion of the transmission case.

A manual transmission adapted to be arranged in tandem with an engine and adapted to be transversely mounted on a vehicle body includes an input shaft driven by the engine for rotation, an output shaft connected to driving wheels, a first counter shaft arranged in parallel to the input shaft and connected to the output shaft, a second counter shaft arranged in parallel to the input shaft and connected to the output shaft, the second counter shaft located at a higher position than the first counter shaft, a first gear change mechanism provided between the input shaft and the first counter shaft and composed of a plurality of gear pairs and a plurality of switching clutches, a second gear change mechanism provided between the input shaft and the second counter shaft composed of a plurality of gear pairs and a switching clutch, a transmission case covering the input shaft, the first counter shaft, the second counter shaft, the reverse shaft, the output shaft, the first gear change mechanism, the second gear change mechanism, a reverse gear change mechanism, wherein a number of the gear pairs of the second gear change mechanism provided between the input shaft and the second counter shaft is less than a number of the gear pairs of the first gear change mechanism provided between the input shaft and the first counter shaft, the plurality of gear pairs of the second gear change mechanism are located close to the engine in an axial direction, the transmission case includes a first portion and a second portion at a rear surface thereof located at an opposite side of the engine, the second portion is formed at an upper portion of the rear surface which positionally corresponds to a portion provided at the second counter shaft of the second gear change mechanism, the first portion positionally corresponds to the first gear change mechanism, the second portion is located relatively close to the engine by locating the plurality of gear pairs of the second gear change mechanism close to the engine, compared to the first portion, thereby forming a cut-out portion in the transmission case.

According to the configuration described above, the transmission further includes the reverse shaft arranged in parallel to the input shaft and connected to the output shaft and the reverse gear change mechanism provided between the input shaft and the reverse shaft and composed of the reverse gear train and the reverse switching clutch. It is desirable that the idle gear, located in the center of the reverse gear train, is rotatably provided at the second counter shaft so as to be close to the gear pair of the second gear change mechanism in the axial direction for transmitting rotation of the input shaft to the reverse shaft.

According to the embodiment described above, it is desirable that the second gear change mechanism and the first gear change mechanism have at least one common driving gear. Namely, the driving gear provided at the input shaft, out of driving gears of the gear pairs included in the second gear change mechanism, is used as one of driving gears of the gear pairs included in the first gear change mechanism.

According to the embodiment described above, it is desirable that the reverse gear change mechanism and the first gear change mechanism have a common driving gear. Namely, the driving gear of the reverse gear train is also used as one of driving gears of the gear pairs included in the first gear change mechanism.

As described above, according to the embodiment, the number of the plurality of gear pairs provided between the input shaft and the second counter shaft, located higher than the first counter shaft, is fewer than the number of the plurality of gear pairs provided between the input shaft and the first counter shaft, and the plurality of gear pairs provided between the input shaft and the second counter shaft are located relatively close to the engine in the axial direction. Consequently, the cut-out portion is formed in the transmission case by locating the second portion of the transmission, which is included in the upper portion of the rear surface located at the opposite side from the engine and positionally corresponds to the portion of the second gear change mechanism provided at the second counter shaft, relatively close to the engine, compared to the first portion of the transmission case positionally corresponding to the first gear change mechanism. Then, the engine and the transmission, arranged in tandem, are transversely mounted at the vehicle so that one of a paired side frame, extending in a longitudinal direction at both sides of the vehicle, is arranged to pass through the cut-out portion of the transmission case. Conventionally, when the cross section of the side frame is enlarged and the side frame is formed in a shape for improving the collision safety and enhancing the stiffness of the vehicle, the side frame interferes with the upper portion of the rear surface of the transmission case. However, in the above configuration, the side frame passes though the cut-out portion of the transmission case, thus avoiding the interference with the transmission case. Therefore, the side frame is arranged within the space in the vehicle.

The transmission further includes the reverse shaft arranged in parallel to the input shaft and connected to the output shaft and the reverse gear change mechanism provided between the input shaft and the reverse shaft and composed of the reverse gear train and the reverse switching clutch. The idle gear, located in the center of the reverse gear train, is rotatably provided at the second counter shaft so as to be close to the gear pair of the second gear change mechanism in the axial direction for transmitting rotation of the input shaft to the reverse shaft. Therefore, the above-described effect is achieved in transmissions having the reverse stage.

The driving gear provided at the input shaft of the gear pair of the second gear change mechanism is also used as the driving gear included in the first gear change mechanism. The number of the gears is reduced by the number of the common driving gear. Thus, the structure of the transmission is simplified and the size of the transmission is reduced.

The driving gear of the reverse gear train is also used as the driving gear of the gear pair included in the first gear change mechanism. The number of the gears is reduced by the number of the common driving gears. Thus, the structure of the transmission is simplified and the size of the transmission is reduced.

### BRIEF DESCRIPTION OF THE DRAWINGS

The foregoing and additional features and characteristics of the present invention will become more apparent from the following detailed description considered with reference to the accompanying drawings, wherein:

Fig.1 is a schematic view showing an example of an entire structure of a transmission used for a vehicle transversely mounting an engine and a transmission which are arranged in tandem;

Fig.2 is a left side view showing an example of the transmission shown in Fig. 1;

Fig.3 is a vertical sectional view taken along a transverse direction of a front of a front-engine, front wheel drive vehicle in which the engine and the transmission, arranged in tandem, are transversely mounted by using technique of the present invention; and

Fig. 4 is a sectional view of the vehicle in which the engine and the transmission, arranged in tandem, are transversely mounted by using known technique.

### DETAILED DESCRIPTION

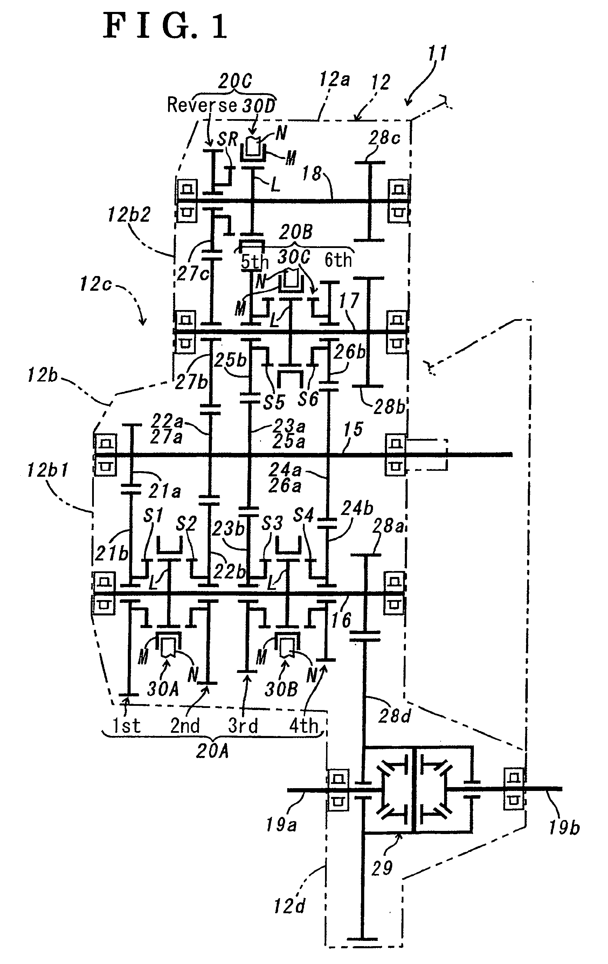

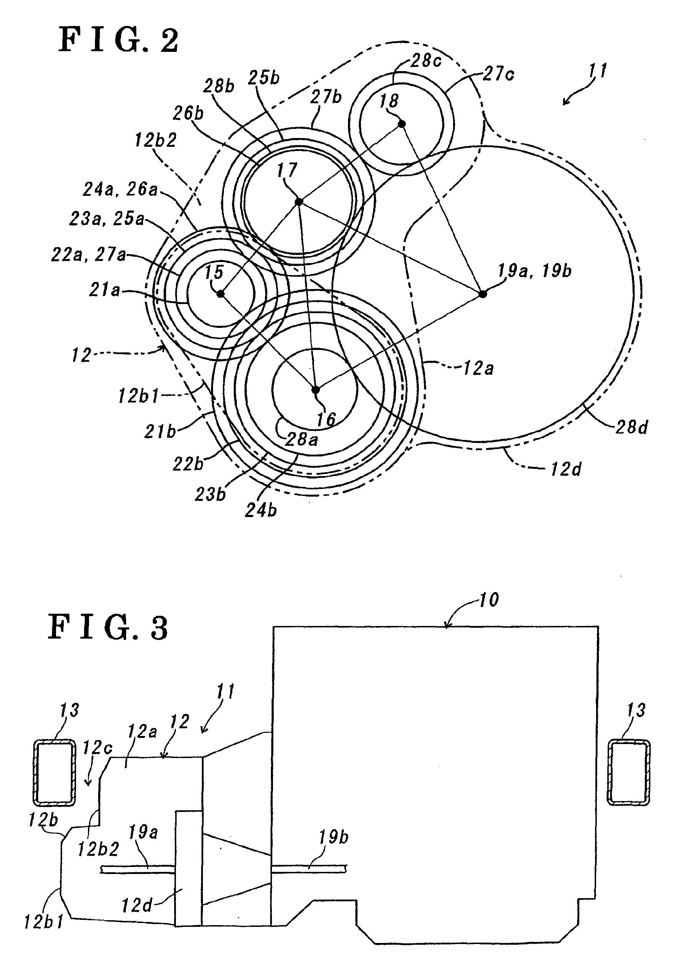

An embodiment of a vehicle transversely mounting an engine and a transmission, which are arranged in tandem, by using the technique of the present invention will be described below with reference to Figs. 1 to 3. Fig. 3 is a vertical sectional view taken along a transverse direction of a front of a front-engine, front wheel drive vehicle to which the invention is applied. An engine 10 and a transmission 11, which are arranged in tandem and connected to each other, are transversely mounted between front portions of left and right side frames 13. Each side frame 13 serves as a major strength member and longitudinally extends at a side of a vehicle body. In Fig. 3, the transmission 11 is located at a left side, and a cut-out portion 12c, recessed as described below, is formed on an upper portion of a rear surface 12b of a transmission case 12. The front portion of the left side frame 13, bent upwardly to avoid the interference with a front axel, is arranged to pass through the cut-out portion 12c.

As mainly shown in Figs. 1 and 2, the transmission 11 is composed of an input shaft 15 driven by the engine 10 for rotation, an output shaft 19 connected to driving wheels, first and second counter shafts 16 and 17, and a reverse shaft 18. The first and second counter shafts 16 and 17 and the reverse shaft 18 are arranged in parallel to the input shaft 15 and respectively connected to the output shaft 19. The transmission 11 further includes a first gear change mechanism 20A provided between the input shaft 15 and the first counter shaft 16, a second gear change mechanism 20B provided between the input shaft 15 and the second counter shaft 17, a reverse gear change mechanism 20C provided between the input shaft 15 and the reverse shaft 18 and a transmission case 12 covering the respective shafts 15 to 19, and the respective gear change mechanisms 20A, 20B and 20C. The input shaft 15 is rotatably supported by the transmission case 12 at a left end and a center of Fig. 1, and a right end portion of the input shaft 15 is connected to a crankshaft of the engine 10 through a clutch (not shown). The counter shafts 16 and 17 and the reverse shaft 18 are rotatably supported by the transmission case 12 at both ends thereof. As shown in Fig. 2, the second counter shaft 17 and the reverse shaft 18 are respectively located at positions higher than the input shaft 15 and the first counter shaft 16.

The first gear change mechanism 20A includes 1st to 4th speed stages. As shown in Figs. 1 and 2, the first gear change mechanism 20A is composed of four gear pairs provided between the input shaft 15 and the first counter shaft 16, i.e. a 1 st speed gear pair 21a, 21b to a 4th speed gear pair 24a, 24b, and first and second switching clutches 30A and 30B which control the power transmission of the four gear pairs between the input shaft 15 and the first counter shaft 16. The respective driving gears 21 a, 22a, 23a, and 24a of the 1st, 2nd, 3rd, 4th speed gear pairs are fixed on the input shaft 15, and the respective driven gears 21b, 22b, 23b, and 24b of the 1st, 2nd, 3rd, 4th speed gear pairs are rotatably provided on the first counter shaft 16. The first switching clutch 30A is provided between the driven gears 21b and 22b and the second switching clutch 30B is provided between the driven gears 23b and 24b. The first and second switching clutches 30A and 30B are respectively composed of a known synchromesh mechanism. The 3rd speed gear pair 23a, 23b, the 4th speed gear pair 24a, 24b, and the second switching clutch 30B are located relatively close to the engine 10, compared to the 1 st speed gear pair 21a, 21b, the 2nd speed gear pair 22a, 22b and the first switching clutch 30A.

The first switching clutch 30A is composed of a clutch hub L, a sleeve M, and engaging members S1 and S2 respectively fixed with the driven gears 21 b and 22b. The clutch hub L is fixed to the first counter shaft 16 and the sleeve M engages with an outer periphery of the clutch hub L through a spline so as to be slidable in an axial direction. When the sleeve M is shifted to the left in Fig. 1 by a shift fork N which is manually operated, the sleeve M engages with the engaging member S1 through the spline. Consequently, the driven gear 21b of the 1st speed gear pair 21a, 21b is connected to the first counter shaft 16 to establish the 1st speed stage. On the other hand, when the sleeve M is shifted to the right, the driven gear 22b of the 2nd speed gear pair 22a, 22b is connected to the first counter shaft 16 to establish the 2nd speed stage in a similar way. The second switching clutch 30B has a configuration which is identical to that of the first switching clutch 30A. When a sleeve M of the second switching clutch 30B is shifted to the left in Fig. 1 by a shift fork N, the driven gear 23b of the 3rd speed gear pair 23a, 23b is connected to the first counter shaft 16 to establish the 3rd speed stage. When the sleeve M is shifted to the right, the 4th speed stage is established.

The second gear change mechanism 20B is used to establish the 5th and 6th speed stages. As shown in Figs. 1 and 2, the second gear change mechanism 20B is composed of two gear pairs provided between the input shaft 15 and the second counter shaft 17, i.e. the 5th speed gear pair 25a, 25b and the 6th speed gear pair 26a, 26b, and a third switching clutch 30C which controls the power transmission of the two gear pairs between the input shaft 15 and the second counter shaft 17. Similarly to the first gear change mechanism 20A, the respective driven gears 25a and 26a of the 5th and 6th speed gear pairs are rotatably provided on the second counter shaft 17, and the third switching clutch 30C is provided between the driven gears 25a and 26a.

The second gear change mechanism 20B includes the two gear pairs and one switching clutch, and the number of these components is less than that of the first gear change mechanism 20A. Thus, the second gear change mechanism 20B is located relatively close to the engine 10 with respect to an axial direction. Further, the first gear change mechanism 20A and the second gear change mechanism 20B have common driving gears, and the driving gear 25a of the 5th speed stage gear pair 25a, 25b is also used as the driving gear 23a of the 3rd speed stage gear pair 23a, 23b. Further, the driving gear 26a of the 6th speed stage gear pair 26a, 26b is also used as the driving gear 24a of the 4th speed stage gear pair 24a, 24b. Similarly to the first gear change mechanism 20A, when a sleeve M of the third switching clutch 30C is shifted to the left in Fig. 1 by a shift fork N, the sleeve M engages with an engaging member S5 fixed to the driven gear 25b through a spline, and then the driven gear 25b of the 5th speed gear pair is connected to the second counter shaft 17 to establish the 5th speed stage. When the sleeve M is shifted to the right, the driven gear 26b of the 6th speed gear pair 26a and 26b is connected to the second counter shaft 17 to establish the 6th speed stage.

The reverse gear change mechanism 20C is used to establish a reverse stage. As shown in Figs. 1 and 2, the reverse gear change mechanism 20C is composed of a reverse gear train 27a, 27b, 27c, provided between the reverse shaft 18 and the second counter shaft 17 and between the second counter shaft 17 and the input shaft 15, and a reverse switching clutch 30D which controls the power transmission of the reverse gear train 27a, 27b, 27c between the input shaft 15 and the reverse shaft 18. The reverse gear train 27a, 27b, 27c is provided close to one side, which is on the opposite side from the engine 10, of the 5th speed gear pair 25a, 25b of the second gear change mechanism 20B. The reverse gear change mechanism 20C and the first gear change mechanism 20A have a common driving gear, and the driving gear 27a of the reverse gear train 27a, 27b, 27c is also used as the driving gear 22a of the 2nd speed stage gear pair 22a, 22b. An idle gear 27b, located at an intermediate portion of the reverse gear train 27a, 27b, 27c, is rotatably provided on the second counter shaft 17. Further, the driven gear 27c is rotatably provided on the reverse shaft 18 and the reverse switching clutch 30D is provided between the driven gear 27c and the reduction gear 28c. The reverse switching clutch 30D has a configuration which is substantially identical to that of the first switching clutch 30A except including an engaging member SR provided at the driven gear 27c which is located at one side of the reverse switching clutch 30D. When a sleeve M of the reverse switching clutch 30D is shifted to the left in Fig. 1 by a shift fork N which is manually operated, the sleeve M engages with the engaging member SR through a spline. Consequently, the driven gear 27c of the reverse gear train 27a, 27b, 27c is connected to the reverse shaft 18 to establish the reverse stage.

As shown in Fig. 1, left and right output shafts 19a and 19b, connected to each other through a differential mechanism 29 at an intermediate position of the output shaft 19, is arranged in parallel to the first and second counter shafts 16 and 17 and the reverse shaft 18. A large reduction gear 28d provided at the differential mechanism 29 meshes with small reduction gears 28a, 28b, and 28c, which are respectively fixed to the first counter shaft 16, the second counter shaft 17 and the reverse shaft 18. Each output shaft 19a, 19b is connected to the driving wheel through joints and a drive shaft.

As shown in Figs. 1 to 3, the transmission case 12 covers each shaft 15 to 18 of the transmission 11, each gear change mechanism 20A to 20C, each reduction gear 28a to 28d, and the differential mechanism 29. As described above, the number of the gear pairs and the switching clutches included in the second gear change mechanism 20B is less than that of the first gear change mechanism 20A. Hence, the second gear change mechanism 20B is located relatively close to the engine 10 with respect to the axial direction. Further, the reverse gear train 27a, 27b, 27c of the reverse gear change mechanism 20C is provided close to one side, which is on the opposite side from the engine 10, of the fifth gear pair 25a, 25b of the second gear change mechanism 20B. Thus, a rear end portion of the second gear change mechanism 20B provided at the second counter shaft 17 and a rear end portion of the reverse gear change mechanism 20C provided at the reverse shaft 18, respectively corresponding to the furthest positions from the engine 10 in each mechanism, are located relatively close to the engine 10, compared to a rear end portion of the first gear change mechanism 20A provided at the input shaft 15 and the first counter shaft 16. Moreover, the second counter shaft 17 and the reverse shaft 18 are respectively located at the positions higher than the input shaft 15 and the first counter shaft 16. Consequently, a portion of the second gear change mechanism 20B, which is provided at the second counter shaft 17, and a portion of the reverse gear change mechanism 20C, which is provided at the reverse shaft 18, are located at positions higher than the first gear change mechanism 20A.

As shown in Figs. 1 and 3, a main body 12a of the transmission case 12, includes a first portion 12b and a second portion 12b2. The first portion 12b positionally corresponds to the first gear change mechanism 20A. The second portion 12b2 is formed at an upper portion of the rear surface 12b and positionally corresponds to a portion provided at the second counter shaft 17 of the second gear change mechanism 20B and a portion provided at the reverse shaft 18 of the reverse gear change mechanism 20C. The second portion 12b2 is located closed to the engine 10, compared to the first portion 12b1 of the transmission case 12, thereby forming the cut-out portion 12c, which is recessed, at an upper corner of the rear surface 12b of the transmission case 12. The main body 12a of the transmission case 12 is further formed with a differential mechanism housing 12d protruding at a side of the engine 10. The differential mechanism housing 12d houses the large reduction gear 28d and the differential mechanism 29.

As shown in Fig. 3, the transmission 11 configured as described above is arranged in tandem with the engine 10, and the transmission 11 and the engine 10 are integrally connected. The engine 10 and the transmission 11 are transversely mounted in the front of the vehicle so that one of the left and right side frames 13, i.e. the strength members of the vehicle body, passes through the cut-out portion 12c of the transmission case 12. Forming the cut-out portion 12c allows the side frame 13 to be arranged within the space in the vehicle, even when the inference between the side frame and the upper portion of the rear surface of the transmission case is unavoidable by the known technique. For example, when the size of the cross section of the side frame increases, or when the side frame is formed in the rectilinear shape for improvements in collision safety and the stiffness of the vehicle, the side frame is arranged within the space in the vehicle body without interfering with the transmission case 12 by passing through the cut-out portion 12c of the transmission case 12.

In the embodiment described above, the invention applies to the transmission having six forward speed stages and one reverse stage. However, the invention is not limited to the model, and is applicable to transmissions having a different number of speed stages. Further, the reverse stage may be eliminated.

Furthermore, the driving gear 25a of the 5th speed stage and the driving gear 26a of the 6th speed stage are also used as the driving gear 23a of the 3rd speed stage and the driving gear 24a of the 4th speed stage, and the driving gear 27a of the reverse gear train 27a, 27b, 27c is also used as the driving gear 22a of the 2nd speed stage. Thus, the number of driving gears is reduced by the number of the common gears. The reduction of the gears leads to simplification of the transmission structure and the size reduction of the transmission. However, the application of the invention is not limited to the form, and the invention may be implemented without including the common driving gears. Even so, the interference between the side frame and the transmission case is still avoidable.

## Claims

1. A vehicle comprising:
an engine (10);
a transmission (11) arranged in tandem with the engine (10), the engine (10) and
the transmission (11) transversely mounted on a vehicle body, the transmission (11) including:
an input shaft (15) driven by the engine (10) for rotation;
an output shaft (19) connected to driving wheels;
a first counter shaft (16) arranged in parallel to the input shaft (15) and connected to the output shaft (19);
a second counter shaft (17) arranged in parallel to the input shaft (15) and connected to the output shaft (19), the second counter shaft (17) located at a higher position than the first counter shaft (16);
a first gear change mechanism (20A) provided between the input shaft (15) and the first counter shaft (16), the first gear change mechanism (20A) composed of a plurality of gear pairs (21a, 21b, 22a, 22b, 23a, 23b, 24a, 24b) and a plurality of switching clutches (30A, 30B);
a second gear change mechanism (20B) provided between the input shaft (15) and the second counter shaft (17), the second gear change mechanism (20B) composed of a plurality of gear pairs (25a, 25b, 26a, 26b) and a switching clutch (30C);
a transmission case (12) covering the input shaft (15), the first counter shaft (16), the second counter shaft (17), the reverse shaft (18), the output shaft (19), the first gear change mechanism (20A), the second gear change mechanism (20B), a reverse gear change mechanism (20C); wherein
a number of the gear pairs of the second gear change mechanism (20B) provided between the input shaft (15) and the second counter shaft (17) is less than a number of the gear pairs (21a, 21b, 22a, 22b, 23a, 23b, 24a, 24b) of the first gear change mechanism (20A) provided between the input shaft (15) and the first counter shaft (16), the plurality of gear pairs (25a, 25b, 26a, 26b) of the second gear change mechanism (20B) are located close to the engine (10) in an axial direction,
the transmission case (12) includes a first portion (12b1) and a second portion (12b2) at a rear surface (12b) thereof located at an opposite side from the engine (10), the second portion (12b2) is formed at an upper portion of the rear surface (12b) which positionally corresponds to a portion provided at the second counter shaft (17) of the second gear change mechanism (20B), the first portion (12b1) positionally corresponds to the first gear change mechanism (20A), the second portion (12b2) is located relatively close to the engine (10) by locating the plurality of gear pairs (25a, 25b, 26a, 26b) of the second gear change mechanism (20B) close to the engine (10), compared to the first portion (12b1), thereby forming a cut-out portion (12c) in the transmission case (12),
wherein a pair of side frames (13) are provided extending in a longitudinal direction at both sides of the vehicle, and one of the side frames (13) is arranged to pass through the cut-out portion (12c) of the transmission case (12).

2. A vehicle according to Claim 1, further comprising:
a reverse shaft (18) arranged in parallel to the input shaft (15) and connected to the output shaft (19) in the transmission case (12); and
the reverse gear change mechanism (20C) provided between the input shaft (15) and the reverse shaft (18), the reverse gear change mechanism (20C) composed of a reverse gear train (27a, 27b, 27c) and a reverse switching clutch (30D), wherein an idle gear (27b), located in an intermediate portion of the reverse gear train (27a, 27b, 27c), is located close to the gear pair (25a, 25b) of the second gear change mechanism (20B) in the axial direction and is rotatably provided at the second counter shaft (17) for transmitting rotation of the input shaft (15) to the reverse shaft (18).

3. A vehicle according to any one of Claim 1 and Claim 2, wherein the second gear change mechanism (20B) and the first gear change mechanism (20A) have at least one common driving gear (25a, 26a, 23a, 24a), and at least one driving gear (25a, 26a) provided at the input shaft (15), out of driving gears of the gear pairs (25a, 25b, 26a, 26b) included in the second gear change mechanism (20B), is also used as one of driving gears (23a, 24a) of the gear pairs included in the first gear change mechanism (20A).

4. A vehicle according to any one of Claim 2 and Claim 3, wherein the reverse gear change mechanism (20C) and the first gear change mechanism (20A) have a common driving gear (22a, 27a), and the driving gear (27a) of the reverse gear train (20C) is also used as one (22a) of driving gears (21 a, 22a, 23a, 24a) of the gear pairs (21a, 21b, 22a, 22b, 23a, 23b, 24a, 24b) included in the first gear change mechanism (20A).

5. A manual transmission adapted to be arranged in tandem with an engine (10) and adapted to be transversely mounted on a vehicle body, comprising:
an input shaft (15) driven by the engine (10) for rotation;
an output shaft (19) connected to driving wheels;
a first counter shaft (16) arranged in parallel to the input shaft (15) and connected to the output shaft (19);
a second counter shaft (17) arranged in parallel to the input shaft (15) and connected to the output shaft (19), the second counter shaft (17) located at a higher position than the first counter shaft (16);
a first gear change mechanism (20A) provided between the input shaft (15) and the first counter shaft (16), the first gear change mechanism (20A) composed of a plurality of gear pairs (21a, 21b, 22a, 22b, 23a, 23b, 24a, 24b) and a plurality of switching clutches (30A, 30B);
a second gear change mechanism (20B) provided between the input shaft (15) and the second counter shaft (17), the second gear change mechanism (20B) composed of a plurality of gear pairs (25a, 25b, 26a, 26b) and a switching clutch (30C);
a transmission case (12) covering the input shaft (15), the first counter shaft (16), the second counter shaft (17), the reverse shaft (18), the output shaft (19), the first gear change mechanism (20A), the second gear change mechanism (20B), a reverse gear change mechanism (20C); wherein
a number of the gear pairs of the second gear change mechanism (20B) provided between the input shaft (15) and the second counter shaft (17) is less than a number of the gear pairs (21a, 21b, 22a, 22b, 23a, 23b, 24a, 24b) of the first gear change mechanism (20A) provided between the input shaft (15) and the first counter shaft (16), the plurality of gear pairs (25a, 25b, 26a, 26b) of the second gear change mechanism (20B) are located close to the engine (10) in an axial direction,
the transmission case (12) includes a first portion (12b1) and a second portion (12b2) at a rear surface (12b) thereof located at an opposite side of the engine (10), the second portion (12b2) is formed at an upper portion of the rear surface (12b) which positionally corresponds to a portion provided at the second counter shaft (17) of the second gear change mechanism (20B), the first portion (12b1) positionally corresponds to the first gear change mechanism (20A), the second portion (12b2) is located relatively close to the engine (10) by locating the plurality of gear pairs (25a, 25b, 26a, 26b) of the second gear change mechanism (20B) close to the engine (10), compared to the first portion (12b1), thereby forming a cut-out portion (12c) in the transmission case (12).
